# EUROPEAN PATENT APPLICATION

(11) **EP 4 345 030 A1**
(43) Date of publication of application: **03.04.2024**
(21) Application number: 22198653.2
(22) Date of filing: 29.09.2022
(51) Int. Cl.: B65G 1/02, A47B 46/00, A47B 88/48, A47F 5/00

(54) **EXTRACTION UNIT FOR EXTRACTING PALLETIZED LOADS FROM A RACKING CELL**

(71) Applicant: TSM Smartstoring AB, 473 91 Henån (SE)
(72) Inventor: Johansson, Kjell, 473 91 Henån (SE); Spangenberg, Mikael, 473 91 Henån (SE); Whitford, Tristan, 473 91 Henån (SE)
(74) Representative: AWA Sweden AB

(57) **Abstract**

An extraction unit 100, 300, 400, 500 for extracting palletized loads from a racking cell. The extraction unit comprises a carrier platform 120, 220, 320, 420, 520 in turn comprising a sliding mechanism 140, 340, 540, wherein the carrier platform is configured to move between a storage position and an extended position by means of the sliding mechanism. The extraction unit further comprises a rotation platform 110, 310, 410, 510 wherein the rotation platform and the carrier platform are connected by a central shaft and a rotation mechanism 130, 230, configure to be attached to the carrier platform. In the storage position, the carrier platform is positioned within the racking cell and, in the extended position, the carrier platform extends outwards from the racking cell. Moreover, the rotation mechanism is configured to enable rotation of the rotation platform relative to the carrier platform, about the central shaft, when the carrier platform is in the extended position.

## Description

### FIELD OF TECHNOLOGY

The present disclosure generally relates to the manipulation of loads stored in a racking system. More specifically, the present disclosure relates to an extraction unit for extracting palletized loads form a racking cell of a racking system.

### BACKGROUND

Solutions for storage of products have attracted and continue to attract attention as the need for optimization of available storage space in warehouses and distribution facilities constantly increases. This need for increased storage space represents an innovation driver in warehousing solutions, in particular for racking systems. The growing interest in racking systems stems in part from its simplicity and flexibility in design, enabling storage of different types of products of various sizes.

In particular, there is an interest in maximizing storage density in racking systems for instance by increasing the depth of the racking cells and racking bays forming the racking system. This increased depth enables several rows of palletized loads to be stored in a same racking cell, therefore reducing the amount of racking bays required to store products. A solution addressing the increase of racking cell depth commonly seen in warehouses is drive-in racking systems which eliminate horizontal beams in racking cells and enable lifting equipment, e.g. fork lifts, to be driven into the racking bays for placement and retrieval of palletized loads. Drive-in racking systems are highly space saving as they reduce the number of necessary aisles throughout the warehouse.

However, racking systems with increased depth are principally suitable for Last-In-First-Out operation models, i.e. palletized loads placed in the racking cells last are the first ones to be retrieved. Deep racking cells and drive-in racking systems are therefore limited in terms of accessibility of each palletized load and favor storage of products with low turnover or non-perishable products. Furthermore, these solutions result in a high frequency of lifting equipment traffic and in complex maneuverability of said lifting equipment which increases the risk of damaging the racking system and the risk of injury. The high frequency of use and complex maneuverability of lifting equipment further represent a considerable time consumption which hinders logistics of the warehouses comprising the racking systems, ultimately resulting in increased cost for the products reaching the end consumer.

### SUMMARY

It is therefore an object of the present disclosure to try to overcome at least some of the deficiencies of current solutions for deeper racking systems, particularly regarding the accessibility of palletized loads stored in the racking system, the risk of damages to racking structures, the risk of injury and the time consumption of lifting equipment operations.

This and other objects are achieved by providing an extraction unit and a method for extracting palletized loads from a racking cell by means of the extraction unit having the features of the independent claims. Preferred embodiments are defined in the dependent claims.

Hence, according to a first aspect, there is provided an extraction unit for extracting palletized loads from a racking cell. The extraction unit comprises a carrier platform in turn comprising a sliding mechanism, wherein the carrier platform is configured to move between a storage position and an extended position by means of the sliding mechanism. The extraction unit further comprises a rotation platform wherein the rotation platform and the carrier platform are connected by a central shaft. The extraction unit further comprises a rotation mechanism configured to be attached to the carrier platform. In the storage position, the carrier platform is positioned within the racking cell and, in the extended position, the carrier platform extends outwards from the racking cell. Moreover, the rotation mechanism is configured to enable rotation of the rotation platform relative to the carrier platform, about the central shaft, when the carrier platform is in the extended position.

Thus, the present disclosure is based on the idea of providing an extraction unit for placement and retrieval of palletized loads in and from a racking cell of a racking system providing an ease of accessibility to the palletized loads regardless of the order in which the loads are place in the racking cell, therefore reducing the time needed for palletized loads to be pace and/or retrieved from the racking cell. As used herein, "racking cell" may be understood as the volume available on a horizontal beam level defined by a pair of vertical beams, or uprights, and "racking system" may be understood as an arrangement of racking cells defining a storage solution. The extraction unit of the present disclosure further stems from the idea of enabling a great turnover of product stored on the palletized loads, in turn permitting perishable and non-perishable goods to be safely stored in the racking system.

The above-stated objects of the extracting unit are fulfilled at least by a pulling out function and a rotation function. The pulling out function is fulfilled by the carrier platform and sliding mechanism. The carrier platform is advantageous in that it provides the load capacity to the extraction unit for the palletized loads placed on said extraction unit. In different words, the carrier platform comprises a structure or frame capable of withstanding high vertical loads generally stored in industrial warehouses. It will be appreciated that the extraction unit according to the present disclosure may form part of the racking cell. In different words, the extraction unit may replace the horizontal beams connecting a pair of uprights, together defining the racking cell. Alternatively, the extraction unit may be installed on a normally assembled racking cell, i.e. uprights connected together by horizontal beams, wherein the extracting unit is fixedly attached to the horizontal beams of the racking cell. For both of the above alternatives, the extracting unit is configured to define the floor of the racking cell, i.e. the bottom surface of the volume in which palletized loads are placed and retrieved. It will be appreciated that a plurality of extraction units may be installed in the same racking cell, depending on the dimensions of the racking cell. The structural connection between the extraction unit and the racking cell is ensured by the sliding mechanism. That is, the sliding mechanism comprises attachment points to the racking cell as such and to the carrier platform, thus enabling the structural connection between the extraction unit and the racking cell. To this end, the sliding mechanism may embody drawer slides permitting the carrier platform to glide in and out of the racking cell. It will be appreciated that the sliding mechanism may embody side-mounted slides, wherein a pair of telescopic slides are positioned on parallel sides of the frame of the carrier platform, or a center-mounted slide, wherein a single telescopic slide is positioned in the center of the frame of the carrier platform. It will further be appreciated that the sliding or gliding movement of the carrier platform is enabled by a plurality of wheels, or ball bearings, comprised in the telescopic slides of the sliding mechanism. The sliding mechanism is therefore advantageous in that it enables the carrier platform to be moved between a storage position and an extended position. As used herein, the "storage position" may be understood as the position wherein the carrier platform is fully inserted in the racking cell. That is, in the storage position the sliding mechanism is retracted such that the carrier platform, and the palletized loads supported thereby, are contained in the volume defined by the racking cell. As used here, "extended position" may be understood as the position wherein the carrier platform is fully extended outward from the racking cell. In different words, in the extended position, the sliding mechanism is extended such that the carrier platform, and the palletized loads supported thereby, are positioned outside of the volume defined by the racking cell.

The rotation function is fulfilled by the rotation platform and the rotation mechanism. The rotation platform is advantageous in that it provides a loading surface on which palletized loads may be placed. It will be appreciated that the surface area of the loading surface of the rotation platform may be dimensioned such that two standard size palettes may be fitted thereon. It will further be appreciated that the loading surface of the rotation platform may also embody larger dimensions to accommodate more than two standard size palettes. Furthermore, the rotation platform is connected to the carrier platform by a central shaft enabling the rotation platform and the carrier platform to be concentric. The connection between the two platforms by the central shaft therefore ensures the alignment of the respective centers of each platform regardless of the palletized loads place thereon, thereby reducing the risk of injury generated by a misalignment of the two platforms during rotation of the rotation platform. The central shaft is further advantageous in that it assists the rotation of the rotation platform by providing an axel about which the rotation mechanism may rotate the rotation platform. In turn, the rotation mechanism enables the rotational movement of the rotation platform relative to the carrier platform. As will be explained later in the present disclosure, the rotation mechanism may be actuated by an operator or user to rotate the rotation platform when the carrier platform has been moved to its extended position. In different words, the rotation platform may be rotated following the extraction of the carrier platform from the racking cell.

Therefore, according to a second aspect, there is provided a method for extracting palletized loads from a racking cell by means of the extraction unit defined above. The method comprises the steps of pulling the extraction unit outwards from the racking cell such that the carrier platform is moved from the storage position to the extended position, disabling a locking mechanism when the carrier platform is in the extended position, such that rotation of the rotation platform is enabled, rotating the rotation platform from the first position to the second position, actuating the locking mechanism when the rotation platform is in the second position, such that the rotation platform is immobilized in the second position and pushing the extraction unit inwards to the racking cell such that the carrier platform is moved from the extended position to the storage position. It is to be noted that the locking mechanism will be defined in detail later in the present disclosure. The aforementioned method steps may all be performed by an operator or user without requiring tedious physical effort thereby increasing the safety of the extraction unit in terms of health hazard for the operator or user. The combination of pulling the carrier platform outwards from the racking cell, i.e. the pulling out function, and rotating the rotation platform when the carrier platform is in the extended position, i.e. the rotation function, therefore enables a position shift of the palletized loads placed on the loading surface of the rotation platform relative to the depth of the racking cell. For example, when considering two palletized loads adjacently placed on the rotation platform in the depth direction of the racking cell, wherein a first palletized load is positioned at the front of the racking cell and a second palletized load is positioned at the rear of the racking cell behind the first palletized load, rotating the rotation platform enables the second palletized load to be brought to the front of the racking cell and the first palletized load to be sent to the rear of the racking cell. The extraction unit and method for extracting palletized loads from a racking cell therefore alleviates the need to use lifting equipment to perform a position shift of the palletized loads placed in the racking cell, reducing the lifting equipment traffic on the warehouse floor, in turn leading to a reduction of the risk of injuries and equipment damages related to high lifting equipment traffic. The extraction unit and method according to the first and second aspect of the present disclosure further reduce the time required for placement and retrieval of palletized loads from the racking cell in comparison to deep racking systems or drive in racking systems. The combination of the pulling out function and the rotation function of the extraction unit thus increases the accessibility to palletized loads placed in racking cells in comparison to deep racking systems or drive in racking systems, leading to a greater turnover of products and to a greater capacity to store perishable products.

According to some embodiments of the present disclosure, the rotation platform may further comprise a frame elongating in a first direction and a loading surface arranged on the frame, wherein the loading surface may be configured to receive palletized loads. The elongation of the frame may provide a substantially rectangular shape to the rotation platform. It will be appreciated that the frame of the rotation platform, and therefore its loading surface, may be dimensioned such that at least two standard sized palettes may be fitted thereon. Alternatively, the frame of the rotation platform, and therefore its loading surface, may be dimensioned to accommodate customized palettes, crates, boxes, etc. used in the warehouse or facility in which the extraction unit is used. Additionally, the first direction along which the frame of the rotating platform elongates may be substantially parallel to the depth direction of the racking cell when the carrier platform is in the storage position. It will be appreciated that the elongation of the frame of the rotation platform may be substantially equal to the depth of the racking cell such that, when the carrier platform is in the storage position, the extraction unit is contained in the volume of the racking cell. Furthermore, the frame of the rotation platform may comprise boarders arranged along the perimeter of the loading surface and substantially perpendicular to the loading surface providing containment of the palletized loads placed thereon and decreasing the risk of pallets falling from the rotation platform. Still further, the frame of the rotation platform may be formed by an integral piece of material, e.g. metal, or may comprise a plurality of openings in the loading surface increasing the air circulation under the pallets placed thereon.

According to some embodiments of the present disclosure, the carrier platform may further comprise a frame elongating in a second direction. As previously stipulated, the frame of the carrier platform provides the load capacity to the extraction unit. It will be appreciated that the frame of the carrier platform may be formed of a beam structure providing structural integrity to the carrier platform. Similarly as for the frame of the rotation platform, the elongation of the frame of the carrier platform may provide a substantially rectangular shape to the carrier platform. Furthermore, the frame of the carrier platform may comprise a support structure fixedly attached to the beam structure of the frame and configured to at least partially hold the rotation mechanism enabling rotation of the rotation platform.

The rotation mechanism, according to some embodiments of the present disclosure, may comprise a plurality of holding members fixedly attached to the frame of the carrier platform. The rotation mechanism may further comprise a plurality of rolling elements, wherein each holding member may be configured to securely hold at least one rolling element, wherein each rolling element may be configured to be in contact with the frame of the rotation platform and wherein the plurality of rolling elements may be configured to enable rotation of the rotation platform relative to the carrier platform, about the central shaft. The plurality of holding members is advantageous in that it enables the attachment of the plurality of rolling elements to the frame of the carrier platform. For example, the plurality of holding members may be connected together to form a polygonal structure wherein each sides of the polygonal structure may hold a rolling element. In this instance, the polygonal structure may preferably embody a pentagonal form, more preferably an hexagonal form and most preferably octagonal form and may be at least partly fixedly connected to the support structure and to the frame of the carrier platform. Each holding member may be a metal bar in the center of which a rolling element is fixed. It will be appreciated that each rolling element may further be connected to the central shaft by means of respective crossbar. The rotation mechanism enables the rotational movement of the rotation platform about the central shaft via the plurality of rolling elements forming a circular rotation pattern being in contact with the inferior surface of the frame of the rotation platform, i.e. the surface of the rotation platform opposite the loading surface upon which palletized loads are placed. It will be appreciated that the rolling elements may be at least one of wheels, ball bearings, railings, grooves, etc. Preferably, each rolling element embodies a ball bearing held by a holding member, e.g. by means of a bolt assembly, minimizing the wear and tear of the inferior surface of the rotation platform. Further, the use of ball bearings as rolling elements increases the load capacity of the extraction unit in comparison to e.g. wheels. It will be appreciated that the rotation mechanism characterized above may alternatively be fixedly attached to the frame of the rotation platform instead of the frame of the carrier platform. For such embodiment, the rolling elements may be in contact with a superior surface of the frame of the carrier platform to provide rotational movement of the rotation platform about the central shaft.

According to some embodiments of the present disclosure, the plurality of rolling elements may extend partially out of the carrier platform, so that a distance between the rotation platform and the carrier platform is smaller than a height of the rolling elements. This configuration enables the holding members and the rolling elements held thereby to be substantially protected from external damaging sources by the frame of the carrier platform without compromising the rotation function of the rotation mechanism and rotating platform. Furthermore, the present embodiment allows a construction of the extraction unit in which the rotation platform and the carrier platform are kept as close as possible, resulting in a more compact extraction unit and decreasing the risk of damages to the rotation mechanism.

According to some embodiments of the present disclosure, the rotation platform may be configured to rotate between a first position and a second position wherein, in the first position and in the second position, the first direction and the second direction may be substantially parallel. That is, in the first position and in the second position, the elongation of the frame of the carrier platform and the elongation of the frame of the rotation platform are in substantially parallel directions. In different words, in the first position and in the second position, the frame of the rotation platform and the frame of the carrier platform are substantially aligned and superimposed. The present embodiment is advantageous in that it reduces the risk of damaging the rotation platform and/or the racking cell when moving the carrier platform between its storage position and its extended position. Furthermore, the rotational movement of the rotation platform between the first position and the second position may be a rotation of 180° such that a palletized load positioned at the rear of the racking cell when the rotation platform is in the first position is moved to the front of the racking cell when the rotation platform is rotated to the second position. It will be appreciated that such rotation is performed by an operator or user, or by means of an electric motor, when the carrier platform is in the extended position.

According to some embodiments of the present disclosure, the extraction unit may further comprise a locking mechanism configured to immobilize the rotation platform relative the carrier platform when the locking mechanism is actuated. The locking mechanism is advantageous in that it prevents rotational movement of the rotation platform when the carrier platform is in the storage position and when the carrier platform is being moved to and from the storage position. This in turn reduces the risk of damaging the palletized loads placed on the rotation platform and the racking cell to which the extraction unit is connected. That is, the locking mechanism ensures that, when the carrier platform is in the storage position or is being moved to and from the storage position, the elongation of the frame of the carrier platform and the elongation of the frame of the rotation platform are substantially parallel. Furthermore, the locking mechanism may be embodied by stopping elements moveably attached to the carrier platform. As such, the stopping elements may be positioned on each of the longer dimensioned side of the carrier platform and at the rear of the carrier platform relative to the depth of the racking cell when the carrier platform is in the storage position. According to some embodiments, the locking mechanism may further comprise a spring configured to biaise the locking mechanism such that it is disabled when the carrier platform is in the extended position. For instance, the stopping elements may be spring-loaded such that, when the carrier platform reaches the extended position, the stopping elements are lowered by the force exerted on the stopping elements by the spring thereby enabling the rotational movement of the rotation platform over the stopping elements. It will be appreciated that the locking mechanism may alternatively be disabled by effect of gravity when the carrier platform reaches the extended position. That is, the stopping elements are lowered by gravity when the carrier platform reaches the extended position, freeing the rotation platform from rotational limitations.

According to some embodiments of the present disclosure, the extraction unit may further comprise a loading lock configured to disable movement of the carrier platform when the carrier platform reaches the extended position. The loading lock provides an additional layer of safety to the extraction unit. That is, when the rotational movement of the rotation platform is enabled by the locking mechanism, the loading lock is actuated to ensure that the carrier platform remains immobile in its extended position until the rotation platform has been rotated to its desired position. The loading lock may be embodied by indentations or notches also positioned on each of the longer dimensioned side of the carrier platform and at the rear of the carrier platform relative to the depth of the racking cell when the carrier platform is in the storage position. It will be appreciated that the indentations are configured to engage the slides of the sliding mechanism when the carrier platform reaches the extended position such that movement of the carrier platform is disabled. It will further be appreciated that the stopping elements and the indentations may both from part of an operating member connected to the carrier platform. In different words, by forming part of the same component, the locking mechanism may be disabled simultaneously as the loading lock is actuated when the carrier platform reaches the extended position. In this instance, the spring of the locking mechanism, configured to biaise the locking mechanism such that it is disabled when the carrier platform reaches the extended position, provides the opposite effect for the loading lock, i.e. the spring biases the loading lock such that it is actuated when the carrier platform reaches the extended position. Alternatively, the loading lock may be actuated by the effect of gravity when the carrier platform reaches the extended position. The locking mechanism and the loading lock forming part of the same component, i.e. the operating member, further permits the reduction of the number of components forming the extraction unit which in turn reduces the complexity of assembly of the unit.

It will further be appreciated that, according to some embodiments of the present disclosure, the extraction unit may further comprise a safety mechanism configured to disable movement of the carrier platform between the storage position and the extended position when the first direction and the second direction are nonparallel. This embodiment may act as a redundancy mechanism for ensuring the safety of the operator or user and the safety of the extraction unit should both the locking mechanism and the loading lock fail to function properly.

As defined above, the use of an extraction unit in a racking system increases the accessibility of palletized loads stored in the racking system, reduces the risk of damages to racking structures, reduces the risk of injury and reduces the time consumption related to lifting equipment operations in comparison to deep racking systems or drive in racking systems. Therefore, according to a third aspect, there is provided a racking system for storage of palletized loads, the racking system comprising at least one racking cell wherein at least one extraction unit according to the first aspect is arranged in the at least one racking cell.

Further objectives of, features of, and advantages with the present disclosure will become apparent when studying the following detailed description, the drawings, and the appended claims. Those skilled in the art will realize that different features of the present disclosure can be combined to create embodiments other than those described in the following.

### BRIEF DESCRIPTION OF DRAWINGS

One or more embodiments will be described, by way of example only, and with reference to the following figures, in which:
Figure 1a schematically illustrates an exploded view of the extraction unit according to some embodiments of the present disclosure;
Figure 1b schematically illustrates a perspective view of an assembled extraction unit according to some embodiments of the present disclosure;
Figure 2 schematically illustrates a perspective view of a carrier platform and a rotation mechanism according to some embodiments of the present disclosure;
Figure 3 schematically illustrates a perspective view of an extraction unit in the extended position according to some embodiments of the present disclosure;
Figure 4 schematically illustrates an enlarged view a portion of the extraction unit showing the locking mechanism and the loading lock when the carrier platform is in the extended position according to some embodiments of the present disclosure;
Figures 5a to 5g schematically illustrates perspective views of the extraction unit according to the steps defined by the method for extracting palletized loads from a racking cell by means of the extraction unit.

### DETAILED DESCRIPTION

The present disclosure is described in the following by way of a number of illustrative examples. It will be appreciated that these examples are provided for illustration and explanation only and are not intended to be limiting on the scope of the disclosure.

Furthermore, although the examples may be presented in the form of individual embodiments, it will be recognized that the present disclosure also covers combinations of the embodiments described herein.

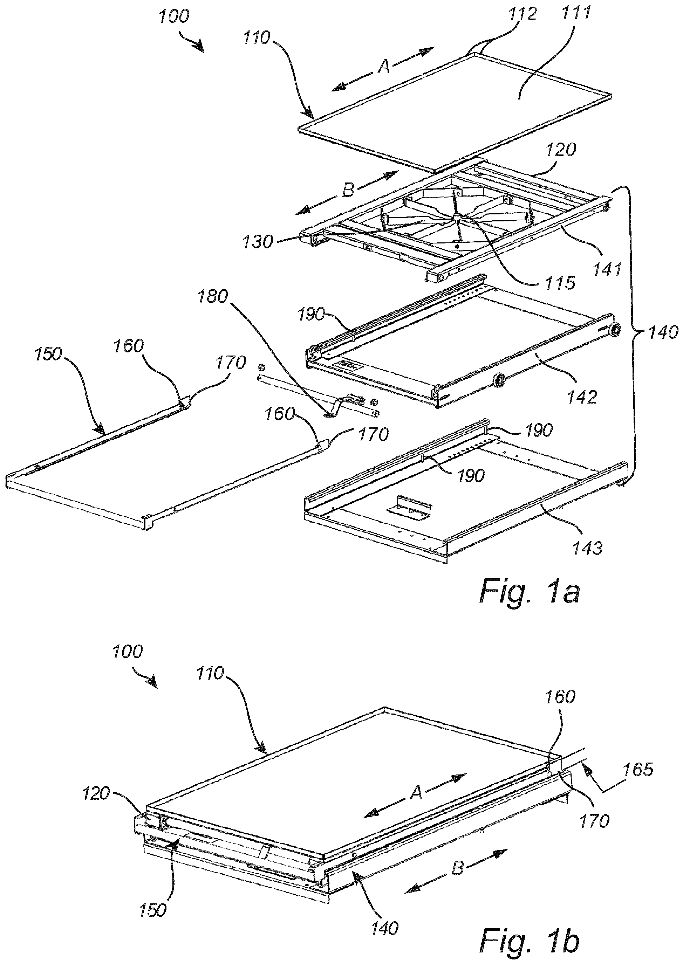

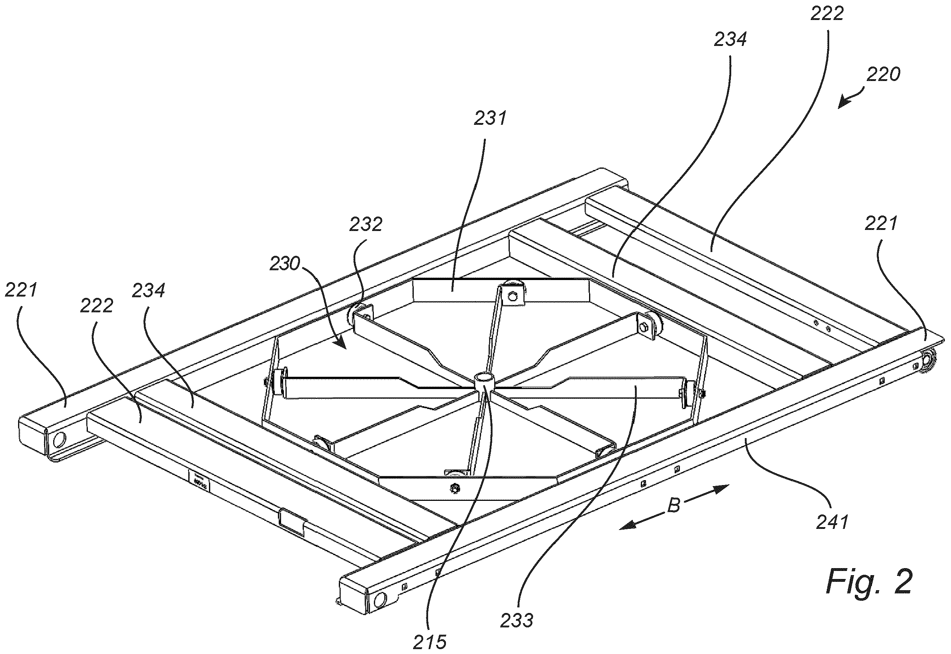

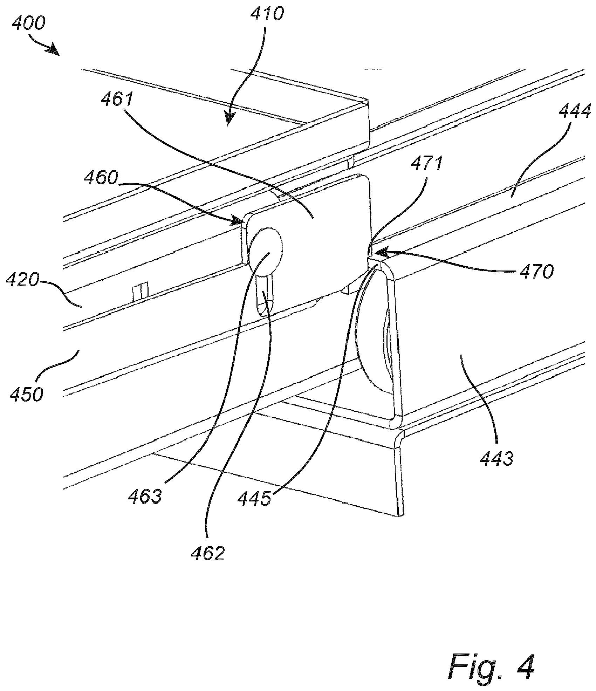

Figure 1a schematically illustrates an exploded view of the extraction unit 100 according to some embodiments of the present disclosure. The extraction unit 100 is shown comprising a rotation platform 110 in turn comprising a frame formed by a loading surface 111 for receiving palletized loads and boarders 112 arranged along the perimeter of the loading surface 111 and substantially perpendicular to the loading surface 111 to provide containment of the palletized loads placed thereon. The frame of the rotation platform 110 shown in Figure 1a elongates in a first direction A such that the loading surface 111 may accommodate two standard size palettes adjacently positioned along the first direction A. Figure 1a further illustrates a carrier platform 120 comprising a frame elongating in a second direction B and to which is attached a rotation mechanism 130. The rotation mechanism 130 is configured to enable rotation of the rotation platform 110 relative to the carrier platform 120 and about a central shaft 115 configured to connect the rotation platform 110 and the carrier platform 120 at their respective centers. It is to be noted that the carrier platform 120 and rotation mechanism 130 attached thereto will be further described in relation to Figure 2. Figure 1a further illustrates the carrier platform 120 comprising a sliding mechanism 140. The sliding mechanism 140 is depicted as three pairs of parallel drawer slides 141, 142, 143 enabling the movement of the carrier platform 120. The first pair of slides 141 is shown integrally formed with the frame of the carrier platform 120, on each side of the carrier platform 120 and extending along the second direction B. The first pair of slides 141 represents the inner most slides of the sliding mechanism 140, in the direction perpendicular to the second direction B. The third pair of slides 143 represents the outer most slides of the sliding mechanism 140 and embodies the structural connection between the extraction unit 100 and the racking cell (not shown in Figure 1a) in which the extraction unit 100 is to be installed. The third pair of slides 143 is also shown extending along the second direction B. The second pair of slides 142 represents the intermediary slides of the sliding mechanism 120 and enables the structural connection of the first pair of slides 141 to the third pair of slides 143, i.e. the structural connection between the carrier platform 120 and the racking cell (not shown). The second pair of slides 142 is also shown extending along the second direction B. It will be appreciated that at least the second and the third pair of slides 142, 143 comprise stoppers 190 configured to limit the movement of the adjacent pair of slides such that over extension of the carrier platform is avoided and such that the load capacity of the extraction unit is maintained in the extended position. Figure 1a further illustrates an operating member 150 configured to be attached to the carrier platform 120 such that it surrounds both sides of the carrier platform 120 along the second direction B as well as the front side of the carrier platform 120, i.e. the side of the carrier platform 120 facing outward from the racking cell. The operating member 150 is shown comprising the locking mechanism 160 and the loading lock 170 which will be described in details in relation to Figure 4. The extraction unit 100 further comprises a latch 180.The latch 180 is a safety mechanism configured to immobilize the carrier platform 120 in its storage position. In different words, the latch 180 may be actuated automatically when the carrier platform 120 reaches the storage position thus preventing the carrier platform 120, and therefore the rotation platform 110 from moving outward from the racking cell. On the other hand, the latch 180 may also be disabled, e.g. by bien pressed in a downward direction perpendicular to the carrier platform 120, thus enabling movement of the carrier platform 120 towards its extended position.

Figure 1b schematically illustrates a perspective view of the extraction unit 100 assembled. Figure 1b shows the carrier platform 120 in a storage position. That is, the storage position sees the carrier platform 120 and the rotation platform 110 positioned fully within the racking cell (not shown in Figure 1b). Moreover, Figure 1b shows the sliding mechanism 140 retracted. The first direction A of the elongation of the frame of the rotation platform 110 is shown substantially parallel to the second direction B of the elongation of the frame of the carrier platform 120 thereby ensuring that palletized loads placed on the rotation platform 110 are safely fitted into the racking cell. Figure 1b further illustrates the operating member 150 connected to the carrier platform 120 such that the operating member 150 surrounds both sides of the carrier platform 120 along the second direction B as well as the front side of the carrier platform 120. The locking mechanism 160 and the loading lock 170 are further shown positioned on each of the longer dimensioned side of the carrier platform 120 at the rear of the carrier platform 120 relative to the depth of the racking cell when the carrier platform 120 is in the storage position, as shown in the present figure. The locking mechanism 160 is depicted as stopping elements 160 positioned on each sides of the carrier platform 120 and rotation platform 110. Only one stopping element 160 is visible in Figure 1b. The stopping element 160, herein shown as a plate, extends vertically such that a height 165 of the stopping element 160 prevents rotational movement of the rotation platform 110. In Figure 1b, the locking mechanism 160 is therefore shown actuated.

Figure 2 schematically illustrates a perspective view of a carrier platform 220 and rotation mechanism 230 according to some embodiments of the present disclosure. The carrier platform 220 is shown comprising a frame formed by a beam structure comprising a first pair of parallel beams 221, defining the elongation of the carrier platform 220 along the second direction B, fixedly connected together by means of a second pair of beams 222 arranged perpendicularly to the first pair of beams 221. Furthermore, Figure 2 depicts the first pair of slides 241 of the sliding mechanism integrally formed with the first pair of beams 221 of the carrier platform 220, along the second direction B. The carrier platform 220 is further shown comprising a support structure 243 fixedly attached to its frame and configured to a least partly hold the rotation mechanism 230 such that the rotation mechanism 230 is fixedly attached to the frame of the carrier platform 220. The rotation mechanism 230 is shown comprising a plurality of holding members 231 connected to one another to form an octagonal structure. Each holding members 231 is depicted as a metal bar configured to hold, at their respective centers, rolling elements 232. The rotation mechanism 230 further comprises a plurality of crossbars 233 configured to connect each rolling element 232 to the central shaft 215. That is, each rolling element 232 is shown securely held by respective holding members 231 and by respective crossbars 233 by means of a bolt assembly. It will be appreciated that the octagonal structure formed by the holding members 231 enables the plurality of rolling elements 232 to form a substantially circular rotation pattern configured to be in contact with the inferior surface of the frame of the rotation platform, thereby enabling the rotational movement of the rotation platform about the central shaft 215. It will further be appreciated that each rolling element 232 is shown extending partially out of the frame of the carrier platform 220.

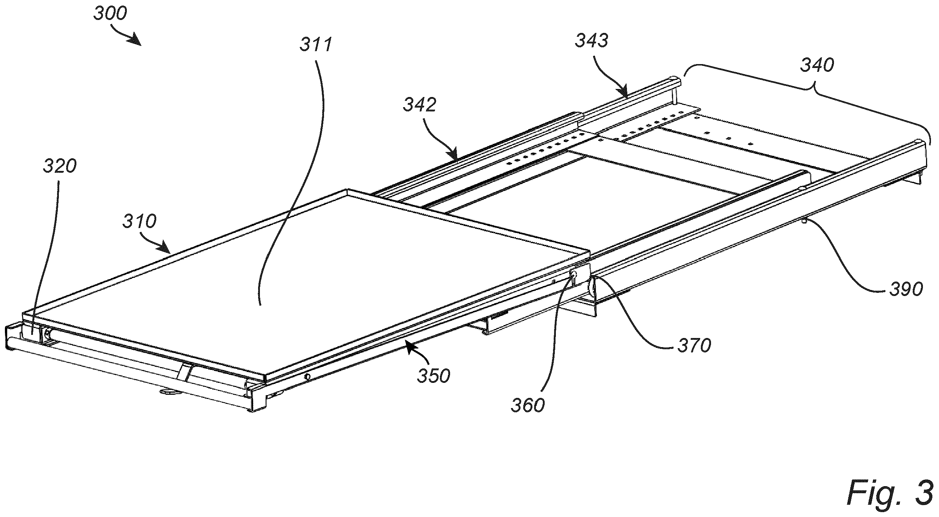

Figure 3 schematically illustrates a perspective view of an extraction unit 300 in the extended position according to some embodiments of the present disclosure. In the extended position, the sliding mechanism 340 is fully extended such that the movement of the second pair of slides 342 is limited by the abutment of the stoppers 390 of the third pair of slides 343. Although not visible in Figure 3, the first pair of slides, forming part of the carrier platform 320, also sees its movement limited by abutment of the stoppers of the second pair of slides 342. Figure 3 further illustrates the operating member 350 comprising both the locking mechanism 360 and the loading lock 370. As shown in Figure 3, the locking mechanism 360 is disabled when the carrier platform 320 reaches the extended position. That is, in the extended position, the ends of the operating member 350 positioned at the rear of the carrier platform 320 and comprising the locking mechanism 360 and loading lock 370 (stopping elements and indentations respectively) are no longer supported by the superior surface of the third pair of slides 343 and are therefore lowered, in a direction substantially perpendicular to the loading surface 311 of the rotation platform 310, by the effect of gravity until the indentations forming the loading lock 370 engage the front end of the third pair of slides 343. It is to be noted that loading lock 370 and locking mechanism 360 will be described in detail in relation to Figure 4. As depicted in Figure 3, when the ends of the operating member 350 are lowered, the stopping elements of the locking mechanism 360 no longer retain the rotation platform 310 thus enabling its rotational movement over the stopping elements. Furthermore, when the ends of the operating member 350 are lowered, the indentations forming the loading lock 370 engage the ends of the third pair of slides 343 disabling the movement of the carrier platform 320 towards the racking cell, i.e. preventing the retraction of the sliding mechanism 340. Therefore, in the extended position, the locking mechanism 360 is disabled simultaneously as the loading lock 370 is enabled following the lowering of the ends of the operating member 350.

Figure 4 schematically illustrates an enlarged view of a portion of the extraction unit 400 showing the locking mechanism 460 and the loading lock 470 when the carrier platform 420 is in the extended position. Figure 4 shows the locking mechanism 460 embodied by a stopping element 461 integrally formed with the operating member 450 and positioned at the end thereof. The stopping element 461 is depicted as a plate extending vertically from the rest of the structure of the operating member 450.The stopping element 461 is further shown attached to the carrier platform 420 by means of a guiding pin 463 configured to be movably engaged in a channel 462 formed in the stopping element 461. The guiding pin 463 and channel 462 enable the stopping element 461 to be lowered or drop when the carrier platform 420 reaches the extended position in which the operating member 450 is no longer supported by the superior surface 444 of the third pair of slides 443. It will be appreciated that the guiding pin 463 and the length of the channel 462 in which it is engaged provide a limitation of the vertical movement of the stopping element 461 when the guiding pin 463 abuts either ends of the channel 462. As shown in Figure 4, the locking mechanism 460 is disabled thereby permitting the rotational movement of the rotation platform 410 over the stopping element 461. That is, when the stopping element 461 is lowered a clearing distance 465 is created between the stopping element 461 and the frame of the rotation platform 410 such that the rotation platform 410 may rotate over the stopping element 461 without contact. Figure 4 further shows the loading lock 470 embodied by an indentation 471 also integrally formed in the operating member 450 and positioned at the end thereof. Figure 4 depicts the loading lock 470 being actuated. That is, when the carrier platform 420 reaches the extended position and the operating member 450 is no longer supported by the superior surface 444 of the third pair of slides 443, the indentation 471 engages the edge 445 of the front end of the third pair of slides 443, disabling movement of the carrier platform 420. The disablement of the locking mechanism 460 and the actuation of the loading lock 470 therefore occur simultaneously when the operating member 450 is no longer supported by the superior surface 444. In different words, when the rotational movement of the rotation platform 410 is enabled, the carrier platform 420 is immobilized by the loading lock 470.It will be appreciated that the above characterization of the stopping element 461 and of the indentation 470 is analogously applicable to the stopping element and indentation positioned on the opposite side of the operating member 450, i.e. on the other side of the carrier platform 420, not visible in Figure 4.

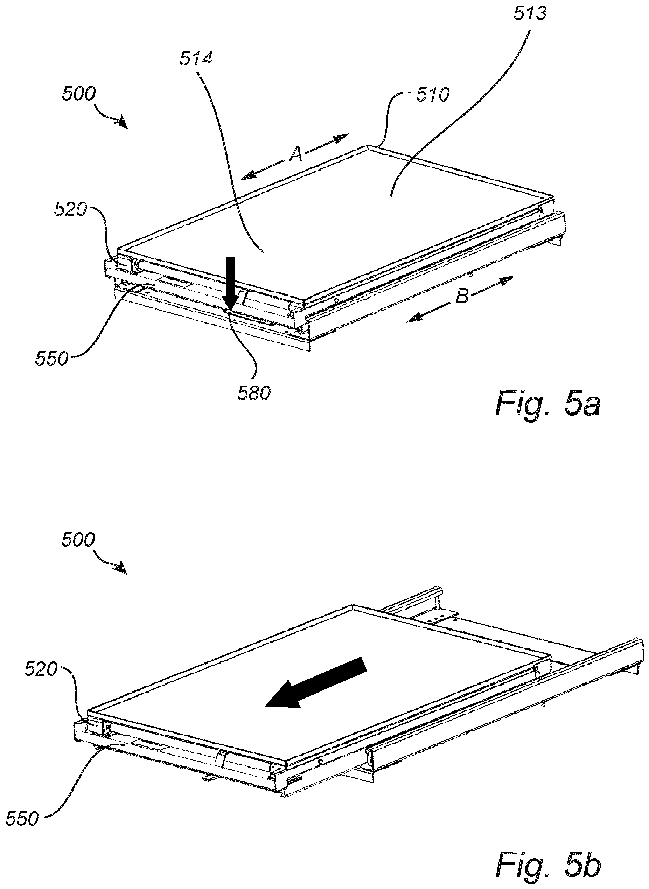

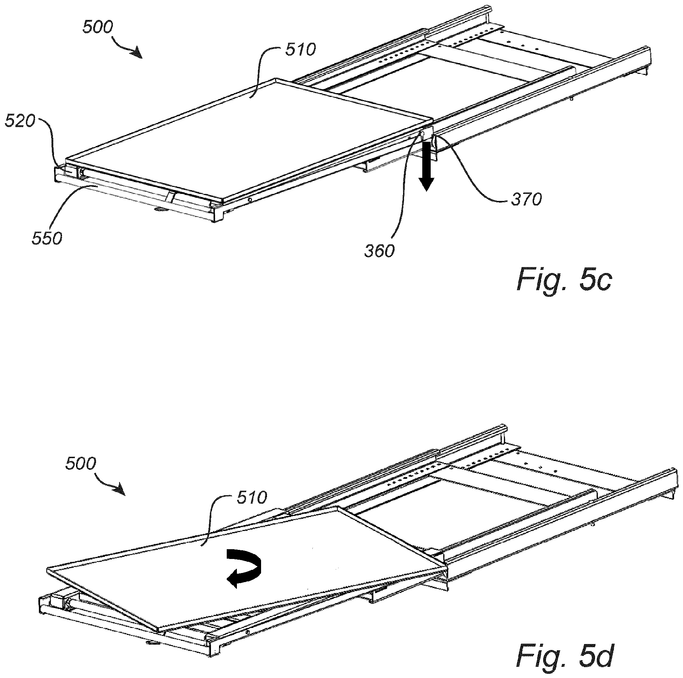

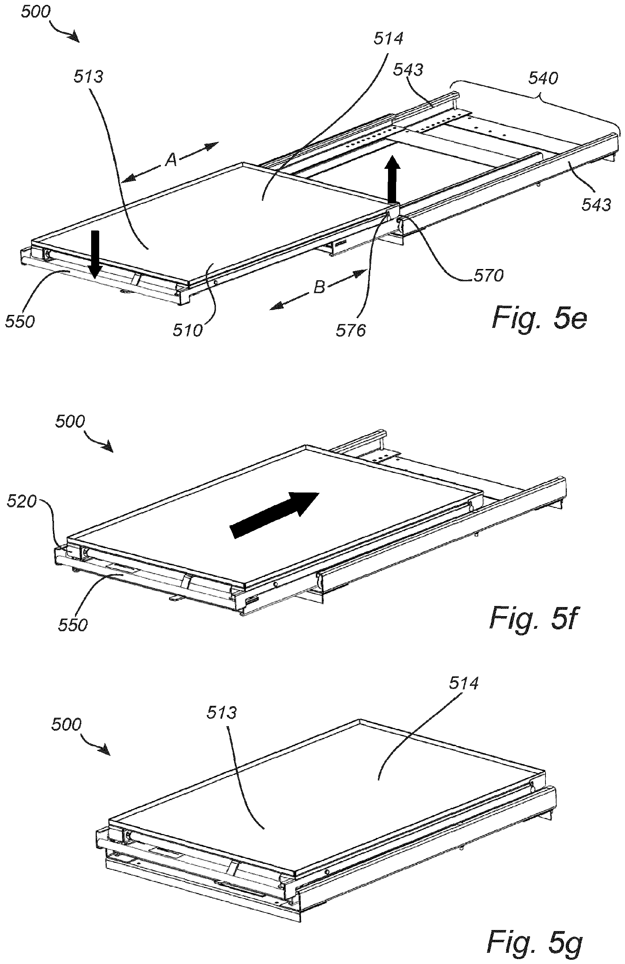

Figures 5a to 5g schematically illustrates perspective views of the extraction unit 500 according to the steps defined by the method for extracting palletized loads from a racking cell by means of the extraction unit 500. Figure 5a to 5c illustrate the method step of pulling the extraction unit 500 outwards from the racking cell (not shown) such that the carrier platform 520 is moved from the storage position to the extended position. In Figure 5a, the extraction unit 500 is shown in the storage position. That is, the carrier platform 520 and the rotation platform 510 are arranged in the volume defined by the racking cell and the first direction A of the elongation of the frame of the rotation platform 510 is substantially parallel to the second direction B of the elongation of the frame of the carrier platform 520. Furthermore, Figure 5a illustrates the rotation platform 520 being in its first position, in which a first section 513 of its loading surface is positioned at the rear of the racking cell in a depth direction of the racking cell and a second section 514 of its loading surface being position at the front of the racking cell in a depth direction of the racking cell. A palletized load placed on the on the second section 514 of the loading surface is therefore accessible for lifting equipment from the front of the racking cell whereas a palletized load placed on the first section 513 of the loading surface is not. The method step of pulling the extraction unit 500 outwards from the racking cell comprises pushing down on the latch 580, as shown by the arrow in Figure 5a, and pulling on the operating member 550 in the direction shown by the arrow in Figure 5b, i.e. in a direction outward from the racking cell. It will be appreciated that pressing, or pushing, down on the latch 580 releases the carrier platform 520 from its storage position thus enabling its movement to the extended position.
It will be appreciated that the above-described method steps are performed by an operator or user. It will further be appreciated that Figure 5b depicts the extraction unit 500 wherein the carrier platform 520 is moving between the storage position and the extended position. Figure 5c illustrates the carrier platform 520 of the extraction unit 500 in the extended position. Figure 5c therefore illustrates the step of disabling the locking mechanism 560 when the carrier platform 520 is in the extended position, such that rotation of the rotation platform 510 is enabled. The step of disabling the locking mechanism 560 further comprises simultaneously actuating the loading lock 570 such that the movement of the carrier platform 520 is disabled. Figure 5c therefore illustrates the operating member 550 having been lowered, i.e. moved in the direction indicated by the arrow in Figure 5c, by effect of gravity as defined in details in Figure 4. It will be appreciated that the step of disabling the locking mechanism 560 and actuating the loading lock 570 are performed without operator or user interaction when the carrier platform 520 reaches the extended position. Figure 5d illustrates the method step rotating the rotation platform from the first position to the second position. That is, Figure 5d shows the rotation platform 510 being rotated 180° from its first position to its second position illustrated in Figure 5e. It will be appreciated that the step of rotating the rotation platform 510 is performed an operator or user. Alternatively, the method step of rotating the rotation platform 510 may be performed by means of an electrical motor. In Figure 5e, the positions of the first and second sections 513, 514 of the loading surface of the rotation platform 510 have been interchanged, and the first direction A of the elongation of the frame of the rotation platform 510 is substantially parallel to the second direction B of the elongation of the frame of the carrier platform 520. Figure 5e further illustrates the method step of actuating the locking mechanism 560 when the rotation platform 510 is in the second position, such that the rotation is immobilized in the second position. The method step of actuating the locking mechanism 560 further comprises pushing on the user end of the operating member 550 in a downward direction substantially perpendicular to the carrier platform 520 as indicated by an arrow in Figure 5e. This enables the ends of the operating member 550, comprising the locking mechanism 560, to be raised in a direction substantially perpendicular to the carrier platform 520, as indicated by an arrow in Figure 5e, further enabling the stopping elements forming the locking mechanism 560 to prevent rotational movement of the rotation platform 510. The method step of actuating the locking mechanism 560 further comprises simultaneously disabling the loading lock 570 such that the movement of the carrier platform 520 by means of the sliding mechanism 540 is enabled. The downward motion of the user end of the operating member 550 further enables the locking mechanism 560, and therefore also the loading lock 570, to be raised higher than the third pair of slides 543 of the sliding mechanism 540 thereby permitting the carrier platform 520 to be moved towards its storage position. Figure 5f illustrates the method step of pushing the extraction unit 500 inwards to the racking cell such that the carrier platform 520 is moved from the extended position to the storage position. The method step of pushing the extraction unit 500 inwards to the racking cell is performed by pushing on the operating member 550 in the direction shown by the arrow in Figure 5f, i.e. in a direction towards the racking cell. It will be appreciated that the above-described method step is performed by an operator or user. It will further be appreciated that Figure 5f depicts the extraction unit 500 wherein the carrier platform 520 is moving between the extended position and the storage position. Figure 5g illustrates the carrier platform 520 in the storage position and illustrates the rotation platform 510 in its second position. That is, the first section 513 of the loading surface of the rotation platform 510 is positioned at the front of the racking cell in a depth direction of the racking cell and the second section 514 of its loading surface is positioned at the rear of the racking cell in a depth direction of the racking cell. Therefore, the palletized load placed on the first section 513 of the loading surface is now accessible for lifting equipment from the front of the racking cell and the palletized load placed on the second section 514 of the loading surface is not.

It will be appreciated that, although the above aspects are presented separately, they may be combined in any suitable manner such that a casing may benefit from all of the advantages provided by respective aspects of the present disclosure.

Furthermore, whilst the forgoing description and the appended drawings are provided as exemplary or preferred realizations of the disclosed aspects, it will be appreciated that the disclosed aspects need not be limited to the exact form shown and/or described.

## Claims

1. An extraction unit (100, 300, 400, 500) for extracting palletized loads from a racking cell, the extraction unit comprises:
a carrier platform (120, 220, 320, 420, 520), comprising a sliding mechanism (140, 340, 540), wherein the carrier platform is configured to move between a storage position and an extended position by means of the sliding mechanism;
a rotation platform (110, 310, 410, 510), wherein the rotation platform and the carrier platform are connected by a central shaft (115, 215);
a rotation mechanism (130, 230) configured to be attached to the carrier platform;
wherein, in the storage position, the carrier platform is positioned within the racking cell and wherein, in the extended position, the carrier platform extends outwards from the racking cell; and
wherein the rotation mechanism is configured to enable rotation of the rotation platform relative to the carrier platform, about the central shaft, when the carrier platform is in the extended position.

2. The extraction unit according to claim 1, wherein the rotation platform further comprises a frame elongating in a first direction (A) and a loading surface (111, 311) arranged on the frame, wherein the loading surface is configured to receive palletized loads.

3. The extraction unit according to claim 1, wherein the carrier platform further comprises a frame elongating in a second direction (B).

4. The extraction unit according to claims 1 to 3, wherein the rotation mechanism comprises:
- a plurality of holding members (231) fixedly attached to the frame of the carrier platform;
- a plurality of rolling elements (232);
wherein each holding member of the plurality of holding members is configured to securely hold at least one rolling element of the plurality of rolling elements;
wherein each rolling element of the plurality of rolling elements is configured to be in contact with the frame of the rotation platform; and
wherein the plurality of rolling elements is configured to enable rotation of the rotation platform relative to the carrier platform, about the central shaft.

5. The extraction unit according to claim 4, wherein the plurality of rolling elements extends partially out of the carrier platform, so that a distance between the rotation platform and the carrier platform is smaller than a height of the rolling elements.

6. The extraction unit according to claims 4 and 5, wherein the rotation platform is configured to rotate between a first position and a second position.

7. The extraction unit according to claim 6, wherein, when the rotation platform is in the first position and when the rotation platform is in the second position, the first direction and the second direction are substantially parallel.

8. The extraction unit according to any one of claims 4 to 7, wherein the plurality of rolling elements is at least one of wheels, ball bearings, railings, grooves.

9. The extraction unit according to any one of claims 4 to 8, further comprising a locking mechanism (160, 360, 460, 560) configured to immobilize the rotation platform relative the carrier platform when the locking mechanism is actuated.

10. The extraction unit according to claim 9, wherein the locking mechanism is arranged on the carrier platform.

11. The extraction unit according to claims 10, wherein the locking mechanism further comprises a spring configured to biase the locking mechanism such that it is disabled when the carrier platform is in the extended position.

12. The extraction unit according to claims 3 to 11, further comprising a safety mechanism configured to disable movement of the carrier platform between the storage position and the extended position if the first direction and the second direction are nonparallel.

13. The extraction unit according to any of the preceding claims, further comprises a loading lock (170, 370, 470, 570) configured to disable movement of the carrier platform when the carrier platform reaches the extended position.

14. A method for extracting palletized loads from a racking cell by means of the extraction unit according to claims 1-13, the method comprising:
- pulling the extraction unit outwards from the racking cell such that the carrier platform is moved from the storage position to the extended position;
- disabling the locking mechanism when the carrier platform is in the extended position, such that rotation of the rotation platform is enabled;
- rotating the rotation platform from the first position to the second position;
- actuating the locking mechanism when the rotation platform is in the second position, such that the rotation platform is immobilized in the second position; and
- pushing the extraction unit inwards to the racking cell such that the carrier platform is moved from the extended position to the storage position.

15. A racking system for storage of palletized loads, the racking system comprising at least one racking cell;
wherein at least one extraction unit according to claims 1 to 13 is arranged in the at least one racking cell.
